# EUROPEAN PATENT APPLICATION

(11) **EP 4 734 433 A2**
(43) Date of publication of application: **29.04.2026**
(21) Application number: 26164472.8
(22) Date of filing: 06.10.2022
(51) Int. Cl.: H04L 9/00

(54) **SYSTEM AND METHOD FOR PROVIDING PERSISTENT AUTHENTICATABLE NON-FUNGIBLE TOKEN**

(30) Priority: 29.10.2021 CH 0704672021
(62) Divisional of application: 22200142.2
(71) Applicant: WISeKey SA, 1216 Cointrin Genève (CH)
(72) Inventor: Clark, Stephen P., Monument, CO 80132 (US); Feuardent Moreira, Andreas, 1233 Bernex (CH); Fuentes Perez, Pedro, 1295 Tannay (CH); Debelleix, Olivier, 83470 Saint Maximin (FR)
(74) Representative: Sammer, Thomas

(57) **Abstract**

The present invention concerns a method and system for long-term authentication of non-fungible tokens (306, 424). In various embodiments the system (400) includes an off-chain storage system (321) having one or more elements of identifying information (325, 326, 327, 328, 329) for an object (307) including at least one element that authenticates the object. In various embodiments the system (400) further includes a blockchain network adapted for recording a non-fungible token (306) located at a public address (312) on a blockchain (304). In embodiments the minted non-fungible token (306) includes at least an identification manifest (322) and/or a hash (404, 370, 372, 374, 376, 378) of all or part of the elements of identifying information and/or a digital NFT certificate (412) including a digital signature from a certifying authority (414) and the hash (404) of at least one of said elements of identifying information (325, 326, 327, 328, 329) and/or of the identification manifest (322), such that the non-fungible token (306) is independently authenticatable against said certifying authority (414) and/or a corresponding validating authority (416) and/or against the off-chain storage system (321).

## Description

### FIELD OF THE DISCLOSURE

The present disclosure relates to digital certification and authentication of digital, physical, and intangible objects, and more specifically, to methods and systems for long-term authentication of non-fungible tokens (NFTs) secured on a blockchain.

### BACKGROUND

A blockchain is a peer-to-peer, electronic ledger which is implemented as a computer-based decentralized, distributed computer-implemented system. A blockchain is made up of a number of individual blocks which, in turn, generally include some number of transactions. Each transaction is a data structure that encodes the transfer of control of a digital asset between participants in the blockchain computer-implemented system, and includes at least one input and at least one output. Each block contains a hash of the previous block so that blocks become chained together to create an extremely modification-resistant record of all transactions which have been written to the blockchain since its inception.

For a transaction to be written to the blockchain, it must be "validated." Generally, network nodes, each storing a copy of the entire blockchain electronic ledger, arrive at a consensus via a consensus mechanism that is based on the rules of the specific blockchain. For the consensus mechanism, miners, stakeholders, or other suitable mechanism performs a process that ensures that each transaction contained in a new block is valid and that invalid transactions are rejected. For example, in order for a transaction to be written to the blockchain it will go through the following steps: i) be validated by the first node that receives the transaction-if the transaction is validated, the node relays it to the other nodes in the network; and ii) added to a new block built by a miner; and iii) mined, i.e., added to the public ledger of past transactions.

The primary area of blockchain-related interest is the use of "tokens" to represent and transfer assets via the blockchain. A token serves as an identifier that allows an object, such as a physical item, digital item, intangible asset, or other asset, to be referenced on the blockchain. Similar to physical assets, the tokens that represent them may have many properties, one of which is fungibility or non-fungibility. Fungible tokens (FT) are uniform, that is, tokens of the same type are identical and are divisible into smaller amounts. As such, a fraction of an FT can be transferred between users. Non-fungible tokens (NFTs), however, cannot be replaced with other tokens of the same type. NFTs represent non-fungible assets, such as assets possessing one or more unique features or characteristics that differentiates the asset from others of the same type. For example, while plane tickets from and to a same destination may look the same, each one has a different passenger name, seat number, etc., and, therefore, is unique. As such, each NFT is unique and differs from other tokens of the same class. Further, in contrast with FTs, NFTs cannot be divided, the elementary unit of the NFT being the token itself.

As an Example, the Ethereum blockchain has implemented the use of a new token standard called ERC-721 for tracking unique digital assets. The ERC-721 is a standard interface used to create, track and manage non-fungible tokens in the Ethereum blockchain. In ERC-721, each token is completely unique and non-interchangeable with other tokens, and thus non-fungible. NFTs allow developers to tokenize ownership of any arbitrary data, drastically increasing the design space of what can be represented as a token on the Ethereum blockchain. The popularity of such tokens has increased exponentially in recent years and correspondingly the prices that collectors are willing to pay have exploded. As of the date of this Application, the ERC-721 token for EtherRock 96 (a digital image of a rock) was purchased for 599 Ether (approximately valued at $2,262,003 at the time of sale). As a further example, the patent application US2021/0248653 discloses a blockchain-based product authentication system allowing to verify the authenticity of physical or digital items by way of trusted authenticators and trusted audit processes. In particular, during an initial product authentication phase, a trusted authenticator can provide a transaction for recordation in a secure trusted tracking system, such as a blockchain, indicating that a given product has been authenticated by the authenticator. However, the system according to US2021/0248653 is directed to authentication of products, primarily of luxury products like high-end athletic shoes or the like, and to a corresponding trading system including such authentication, but doesn't allow for persistent authentication of non-fungible tokens (NFTs). The document US 2016/0300234 discloses systems and methods for decentralized title recordation and authentication by use of a blockchain, in particular by use of a system called "bitmark". These systems and methods may include using a cryptographically safe hash function in order to provide a fingerprint for digital assets or using a physical unclonable function (PUF) in order to provide a unique identifier/fingerprint for physical assets. Digital signatures, created by use of private keys of users of said bitmark system, are then used to issue and transfer titles, also referred to in US 2016/0300234 as "bitmarks", on such assets by use of blockchains. However, the systems and methods according to US 2016/0300234 only use a key pair or a signature of the owner of the asset ownership of which should be recorded or transferred, i. e. that assets are self-signed and that any user of said bitmark system can issue new bitmarks for an asset, which severely limits usability of these systems and methods. The document US 2019/0253256 is related to tracking and verifying authenticity of physical assets like gold bars, gemstones, coins or the like via a distributed ledger such as a blockchain, the corresponding system comprising two structural parts, a first one supposed to register assets and a second one supposed to verify target assets, respectively to authenticate registered assets. However, this system doesn't disclose means for persistent authentication of non-fungible tokens (NFTs). Clearly, in view of the known prior art briefly discussed above, additional improvements to the growing field of NFTs and blockchain would be welcome.

### SUMMARY

Embodiments of the disclosure are directed to systems and methods for establishing the long-term authenticity of non-fungible tokens (NFT) minted on a public blockchain. In particular, various embodiments of the disclosure are directed to systems and methods for minting an NFT to possess, in addition to the typical digital signature produced via a public/private key pair, additional composition such that the NFT is object agnostic and persistently authenticatable across long spans of time. For example, various embodiments provide for systems and methods that establish the long-term authenticity of NFTs regardless as to whether the NFT is associated with a digital object, physical object, or intangible object, such as intellectual property assets, contracts, or other intangible assets, and allow for authentication in a variety of scenarios, such as when the associated object is not directly derived from the private key.

While it is generally the case that an NFT will be preserved on a public blockchain via a network of nodes and secured via the blockchain's consensus mechanism, such as proof of work, proof of stake, or other suitable consensus mechanism, there is no assurance that the NFT itself will preserve its ability to authenticate an associated object or its association with that object, particularly over long or very long periods of time. For example, traditional NFTs can typically only be authenticated against the possession of a private key via a public/private key pair. And while in some specific scenarios this information alone may be sufficient to authenticate the NFT, in many instances the NFT at least partially relies on one or more third parties to establish its association with a specific object. For example, often this responsibility is left to third party NFT exchanges, centralized databases, the private key holder, or to other entities.

As such, while there may be a high confidence in the ability of a blockchain to preserve and store the public key and digital signature information of the NFT along with any subsequent transaction data over long and very long periods of time - a blockchain cannot preserve information which the NFT does not itself include. As such, in many instances the blockchain will not preserve the linkage between the pseudo-anonymous public key or digital signature to the actual identity of the NFT minter. Further in many instances the blockchain will not preserve the association of the NFT with the object. And still further in many instances it will not contain enough information to ensure that the minter of the NFT was the originator or possessor of the object at the time of minting or had authority to mint the NFT on behalf or on the instructions of the originator or possessor of the object.

This is particularly a concern with regard objects that possess significant pre-blockchain history. In many instances, the pre-blockchain history is not maintained on the blockchain. This history is important to assist in independently verifying the authenticity of the NFT. Further, with regard to physical objects, such as physical art, or real estate, there is no information or documentation regarding appraised value or origin. In addition, with regard to physical objects the unique features that identify the specific object are not necessarily independently linked to the NFT. For digital objects the source construction resources and files are not linked and there are no certifications of authenticity or origin. Further, for digital NFTs, the ownership of the NFT or indication that the NFT was rightfully minted is not assured at the time of creation.

In addition, there is further concern with regard to intangible objects or other objects that possess contractual obligations or rights associated with their use. For example, for physical objects, the contracts, copyrights, rights for derivative works, etc. that exist have not been included at the time of minting. For digital objects, the rights to display, make derivative works, etc., are not established at the time of minting. Further, rights for use of the NFT itself are not clearly defined. Still further, with regard to both physical and digital objects, the NFT provides no assurance of long-term storage of the associated object. Since most objects exist "off-chain" the long-term storage of these assets must be persistent to ensure long-term value. Finally, NFTs currently provide insufficient acknowledgement and disclosure of smart contracts. For example, terms that will be auto-executed on the blockchain may not be disclosed. For example, any terms that relate to future resale of the NFT, royalties, or the like. In instances where such terms are included in the NFT they are not necessarily formatted into a human readable and comprehensive list of terms. Also, when minting a "Back to Physical" NFT, the authenticity of the physical object must be assured and links to the parent NFT must be authenticatable.

As such, typical NFTs fail to possess sufficient composition in order to ensure that the minted NFT is authenticatable and persistent across time. In particular, none of the existing NFTs are minted with composition to ensure their authentication particularly with regard to items with physicality, or items that were not directly derived from the private key holder.

While relying on third parties to store and/or authenticate this information may not pose a significant risk over short periods of time, information can easily degrade over long enough periods of time. For example, third-party exchanges and centralized databases may suddenly cease to exist or the data which they store may become lost or compromised. As a result, the information relied on to tie the NFT to the object or to the identity of the minter can be lost. As such, over several decades or even over centuries the owner of an NFT, their descendants, and others may find it difficult to discern whether an NFT is authentic or what object the NFT is associated with, the pre-blockchain history, any contractual obligations or rights associated with the corresponding object, and even the location where the object itself is located. Without addressing these issues the long term value of NFTs will suffer.

As such, embodiments of the disclosure are directed to systems and methods for establishing the long-term authenticity of NFTs when minted on a public blockchain. In order to solve the technical problems for described above, embodiments will define the structure, composition and process of an authenticatable and persistent NFT to establish and maintain long-term value. This structure and composition is applied during the minting process of the NFT to ensure that the NFT is not corrupted, incomplete, or ambiguous. In various embodiments, a signed certificate from a trusted authority will be generated as evidence that this process has been properly performed.

One or more embodiments provide benefits in the form of a system and method for digital token based authentication of unique objects that allows for long term storage of authenticating tokens within a blockchain over decades or even centuries, so long as the blockchain itself remains in operation. Further, various embodiments provide benefits in that it generates long-term authenticatable NFTs on a public blockchain where the private key can be held by a third party or generated by a third party with permission while still allowing the NFT holder to verify its authenticity as to the source of the NFT. Such benefits are expected to be particularly useful as services and industry around NFTs and blockchain tokens develop where a private key is stored on behalf of the creator/owner of the object or the NFT is created by the third party on behalf of the creator/owner. In particular various embodiments of the disclosure provide benefits for minting, establishing, and maintaining long-term NFTs that are object agnostic. For example, various embodiments ensure long term authentication of NFTs that are associated with physical objects, sometimes referred to as a "Digital Twin", or NFTs that are associated with digital objects or intangible assets.

As such, various embodiments of the disclosure are directed to systems and methods for long-term authentication of non-fungible tokens. In various embodiments the method includes providing within the non-fungible token a hash of an identification manifest that includes one or more elements of identifying information for a unique object and a digital certificate of a trusted certifying authority. Corresponding systems comprise an associated off-chain storage for long-term storing of the unhashed identification manifest. In one or more embodiments the one or more items of identifying information include at least one element that authenticates the unique object and at least one element that authenticates the owner of the object. In one or more embodiments the system further includes a blockchain network including a distributed blockchain recording a non-fungible token located at a public address on the blockchain. In various embodiments the non-fungible token includes at least the hash of each of the one or more elements of identifying information. In certain embodiments, the non-fungible token can additionally include the unhashed identification manifest and/or the NFT certificate. In such embodiments, the non-fungible token is independently authenticatable by use of said hashes, against the one or more elements of identifying information in the off-chain storage system and/or by use of the unhashed identification manifest and/or by use of said NFT certificate against said certifying authority and/or a corresponding validating authority. In various embodiments the non-fungible token includes unhashed information including a location of said one or more elements of identifying information in the off-chain storage system.

The above summary is not intended to describe each illustrated embodiment or every implementation of the present disclosure.

### BRIEF DESCRIPTION OF THE SEVERAL VIEWS OF THE DRAWINGS

The drawings included in the present application are incorporated into, and form part of, the specification. They illustrate embodiments of the present disclosure and, along with the description, serve to explain the principles of the disclosure. The drawings are only illustrative of certain embodiments and do not limit the disclosure.
FIG. 1 depicts a diagram of an example of a blockchain network 100 that may be accessed according to one or more embodiments of the disclosure.
FIG. 2 depicts a block diagram of a digital processing environment in which various embodiments can be implemented.
FIG. 3A-B depict an example off-chain storage for physical and digital objects as well as forming part of a system according to one or more embodiments of the disclosure.
FIG. 3C depicts an example blockchain including an NFT formed for such objects in accordance with one or more embodiments of the disclosure.
FIG. 4 depicts a schematic overview of a system for certification of authenticity of an NFT recorded in a blockchain and/or associated identifying elements stored on an off-chain storage according to one or more embodiments of the disclosure.
FIG. 5A depicts a process of minting an NFT according to one or more embodiments of the disclosure.
FIG. 5B depicts a process of minting an NFT according to further embodiments of the disclosure.
FIG. 6 depicts a block diagram of an example embodiment of an internal structure of a computer according to one or more embodiments of the disclosure.

While the embodiments of the disclosure are amenable to various modifications and alternative forms, specifics thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure.

### DETAILED DESCRIPTION

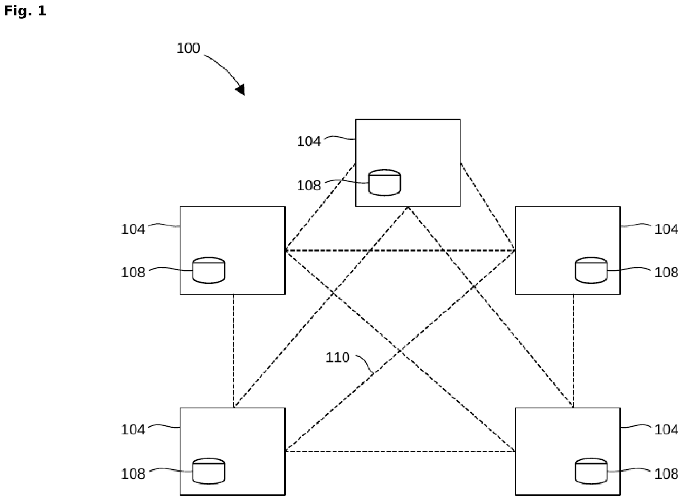

Referring to FIG. 1, a diagram of an example of a blockchain network 100 that may be accessed according to one or more embodiments of the disclosure. The blockchain network 100 is a distributed ledger peer-to-peer network and enables processing and recording of transactions without the need to trust any individual user (e.g., person, entity, program, and the like) involved in the transactions, reducing the need for intermediaries to facilitate the transaction. In various embodiments, existing applications use the blockchain network 100 to transfer and record, in the form of blockchain-based records, movement of tokens. Such blockchain-based records form a cryptographically secured backlinked list of blocks.

In various embodiments, the blockchain network 100 comprises multiple computing devices configured as nodes 104. Each node 104 locally stores and maintains a respective copy 108 of the blockchain ledger in memory communicatively coupled to the node. The nodes 104 exchange messages within in the network 100 to update and synchronize the copy of the ledger 108 stored and maintained by each node 104. In various embodiments, the nodes 104 may also execute decentralized applications (e.g., via smart contracts) for processing the messages. A message transmission 110 between nodes may be used to exchange a token in the network 100. Depicted in FIG. 1 the dotted lines between each set of nodes 104 indicate that similar transmissions that may be exchanged between any other set of nodes 104 in the network 100. In various embodiments, the messages may include a confirmed transfer for recording data associated with the token being transferred, a blockchain public key for each of the one or more parties participating in the transfer. According to various embodiments the blockchain network 100 may be the Ethereum network; however, it should be understood that the network 100 could represent any suitable blockchain network.

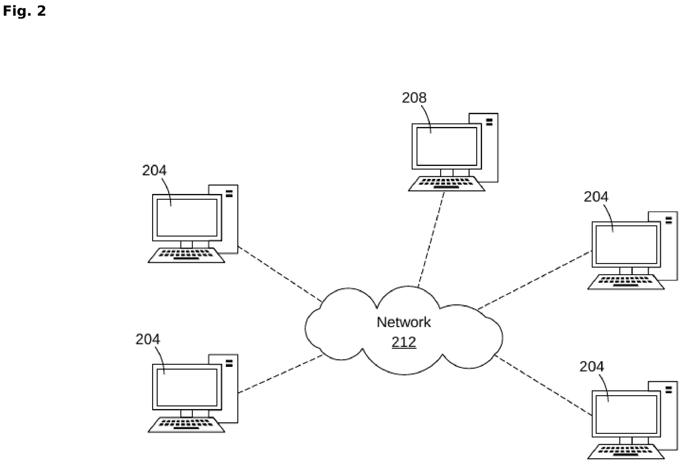

Referring to FIG. 2, a block diagram of a digital processing environment in which various embodiments can be implemented. Client computers/devices 204 and server computers/devices 208 provide processing, storage, and input/output devices executing application programs and the like. Client computers/devices 204 are linked through communications network 212 to other computing devices, including other client computers/devices 204 and server computer(s) 208. The network 212 can be part of a remote access network, a global network (e.g., the Internet), a worldwide collection of computers, local area or wide area networks, and gateways that may use respective protocols (e.g., TCP/IP, Bluetooth, etc.) to communicate with one another. Other electronic device/computer network architectures are suitable. For example, client computers/devices 204 may include nodes shown in FIG. 1, which run user applications that enable a user to communicate with an application to determine whether a user meets a work requirement. A digital wallet may be configured on the node 104 to manage one or more private keys for generating and/or signing transactions to be broadcasted on the blockchain network.

Server computers 208 of the computer-implemented system may be configured to include a server that executes the application. For example, the application of the server computer 208 may determine whether a user has satisfied a work requirement and produce a determination result and pair, in computer memory, an indication of the determination result with an identifier of the user or an identifier of a digital asset of the user, such as an address of a digital wallet owned by the user. The application of the server computer 208 also facilitates transfers of tokens. For another example, server computers 208 or client devices 204 may comprise peer computing devices (nodes) 104 of a distributed blockchain network of FIG. 1, which uses smart contracts to execute and record transactions implemented via tokens.

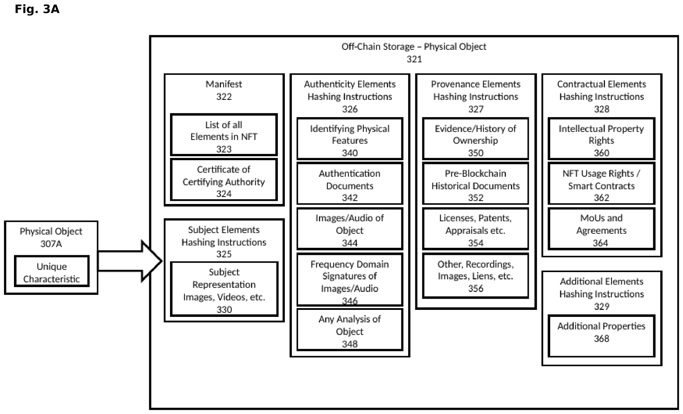

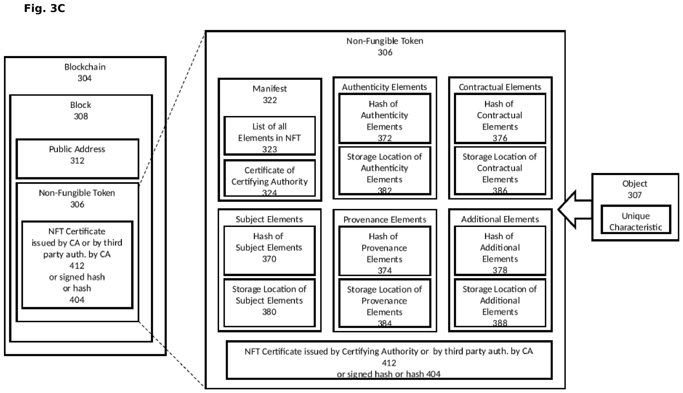

Referring to FIG. 3C, an example blockchain 304 is depicted including an NFT 306 formed in accordance with one or more embodiments of the disclosure. FIG. 3C depicts an example NFT 306 formed in association with either a corresponding physical or digital object 307 (307A or 307B) while FIG. 3A-B depict an example off-chain storage used during minting the NFT 306 for such a physical object 307A and digital object 307B. As described herein, the minting process and composition of the NFT 306 will be substantially similar in either instance such that the NFT and embodiments described herein are object agnostic and apply regardless of the physicality of the object. As described above, in various embodiments, the blockchain 304 is a digital ledger including one or more blocks each generally including transactions recording the transfer/generation of digital tokens to one or more public addresses. For example, like shown in FIG. 3C, blockchain 304 includes block 308 in which a NFT 306 is recorded as being located at public address 312. In various embodiments, the NFT 306 is accessible via a corresponding private key of an asymmetric cryptographic key pair to the public address 312. In such embodiments, the NFT 306 can be transferred, controlled, or otherwise managed via a digital wallet, physical wallet, or other private key management device that is configured to manage the private key for the public address 312 and sign transactions from the public address 312 for broadcast to the blockchain 304. As such, the NFT 306 may be available for trade to one or more sellers/buyers on the network.

In general, in one or more embodiments, the NFT 306 comprises one or more hashed identification elements required and/or desired in the NFT for authenticating the NFT's connection with a unique object 307. For example, and discussed further below, the NFT 306 includes hashed authenticity elements, hashed contractual elements, hashed provenance elements, and hashed additional elements. As such, the identification elements used to create the NFT 306, including hashes to identifying information stored off-chain, the identification elements serve as a source of authentication as to the relationship of the NFT 306 with reference to a unique object 307 and as an indication of the authenticity of the NFT 306 itself.

In various embodiments, the NFT 306 additionally includes other information. For example, in certain embodiments, the NFT 306 can include an identification manifest 322 that includes a list 323 of all elements in the NFT. For example, in various embodiments the identification manifest 322 can include a list of the elements that are hashed in the NFT 306. In certain embodiments, the manifest 322 could include unhashed information as well, such as unhashed versions of the hashed information. In certain embodiments the NFT 306 can include unhashed information, for example information on a storage location of unhashed versions of the hashed elements and/or location of instructions for verifying the included hashes. In one or more embodiments the manifest 322 could include a certificate 324 of a certifying authority for the off-chain storage of the unhashed versions of the hashed identifying information. In various embodiments, the certificate 324 is generated as evidence that the identifying elements included in the NFT and off-chain storage are correct and accurate. As such, in various embodiments the certificate 324 can include various information which can verify that the contents of the corresponding off-chain storage such as a list of all identifying elements 323.

As a consequence of the NFT's presence on the blockchain 304, the NFT 306 is digitally signed by the private key holder who may be the creator/owner of the object 307 and/or the creator/owner of the NFT 306 or a third party acting on behalf of the creator/owner of the object 307 and/or of the NFT 306. A digital signature 314 that is associated with the NFT 306 is present on the blockchain 304, for example as part of a transaction. As such, in various embodiments, the elements that are included in the NFT 306 may be referred to as digitally signed elements. Such digitally signed elements authenticate that they originate from someone in possession of the private key via their presence in the NFT 306. For example, because the digitally signed elements are established in the minting process they therefore unambiguously indicate the source of the elements as being from one in possession of the private key.

In one or more embodiments the NFT 306 can include an NFT certificate 412. In one or more embodiments the NFT certificate 412 is a digital certificate issued by a certifying authority that indicates that the NFT 306 itself has been authenticated by a certifying authority. As such, in one or more embodiments the NFT certificate 412 can be quickly used to verify the authenticity of the NFT without requiring one to validate the contents of off-chain storage. In one or more embodiments the NFT certificate 412 can further include a unique certificate serial number that can be used to identify the NFT 306. In various embodiments, where the certification 412 is a digital certificate, the certificate can be stored within a cryptographic smart chip or other computer storage medium comprising computer program means allowing a user to view and validate cryptographic information on-board.

As such, in various embodiments, the NFT 306 possesses an enhanced composition at least from the elements required and/or desired in the NFT 306 which function to establish long-term authenticity of the NFT 306 including over extremely long periods of time - maintaining a clear link to a corresponding object and serving as proof of the authenticity of the NFT with respect to the object.

As discussed, the NFT 306 includes one or more sets of hashed and un-hashed information/data. In various embodiments, the composition of the NFT can include hashed elements/data for at least several purposes. First, hashing elements/data allows for large amounts of data to be compressed and represented within the composition of the NFT 306 regardless of the original form or content of the identifying information/elements. This allows for an arrangement where a relatively small amount of hashed data is included in the NFT itself along with some pointer or link to an off-chain location where data in its unhashed form can be found to authenticate the hash. This also benefits in avoiding adding significant amounts of material into the NFT 306, which may or may not even be technically feasible depending on the blockchain 304. As such, embodiments of the disclosure can be utilized on nearly any available public blockchain. In addition, because the blockchain 304 and all transactions are normally fully publically viewable on the network, hashing identifying elements allows for the inclusion of potentially sensitive or private information within the NFT 306 without compromising such information.

In various embodiments, the hashed elements included in the NFT will include various documents and images and other data that are digitized and hashed including hashed subject elements 370 of the subject of the NFT, hashed authenticity elements 372, hashed provenance elements 374, hashed contractual elements 376, and hashed additional elements 378. In such embodiments the hashed authenticity elements 372 include hashed information that establishes a connection between the object 307 and the NFT 306 via a collection of unhashed authenticity information stored off-chain that is designed to unambiguously point to the hashed information included in the NFT.

For example, FIG. 3A schematically illustrates the elements of identifying information/data required and/or desired for building a NFT 306 according to the present invention for a physical object 307A, these elements being collected and stored on an off-chain storage 321. Like shown in the example, said elements at least part of which represent unique characteristics of the physical object 307A may comprise subject elements 325 such as images, videos, etc. 330 representing the object 307A, authenticity elements 326 of the object 307A along with any unique characteristics of the object, provenance elements 327, contractual elements 328, and additional elements 329. The authenticity elements 326 can include physical identifying features 340 of the object 307A along with any unique characteristics of the object, any authentication documents 342, such as certificates of authenticity or other documents 342 indicating analysis of the object 307A. In certain embodiments, the authenticity elements 326 can include images, video, or audio 344 of the object 307A. For example, recording unique physical features or designs or sounds of operation. In certain embodiments this data could additionally include frequency domain signatures 346 of the image, video, or audio data or any other type of object analysis 348 allowing authentication of the object 307A.

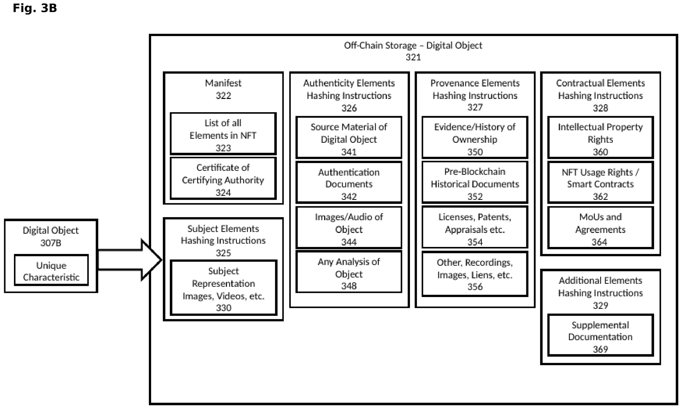

FIG. 3B schematically illustrates the elements of identifying information/data required and/or desired for building a NFT 306 according to the present invention for a digital object 307B, these elements again being collected and stored on an off-chain storage 321. In this case, whilst the subject elements 325 may still consist in images, videos, etc. 330 representing the object 307B, the authenticity elements 326, instead of physical identifying features 340 of a physical object 307A, can include source material 341 for the digital object 307B. For example, in various embodiments the source material 341 could include the source construction resources and computer programs, original files, original images, and/or any other source material that was used in creation of the object 307B. Of course, the authenticity elements 326 for the digital object 307B can also include any authentication documents 342, images, video, or audio 344 or any other type of object analysis 348 allowing authentication of the digital object 307B.

For both physical objects 307A and digital objects 307B and such as shown in FIGS. 3A-3B, in one or more embodiments the provenance elements 327 include information that authenticate the origin of the NFT as originating from the rightful owner/creator of the object or from someone who generated the NFT on behalf of the rightful owner. In such embodiments the authenticity elements 326 include information that establishes a connection between the object 307 and the person or entity in possession of the private key. In various embodiments, the provenance elements 327 include any documents or materials providing evidence of ownership 350 and the pre-blockchain history 352 of the physical object 307A, respectively of the digital object 307B. For example, in various embodiments provenance elements 327 can include a deed, title documents, and historical documentation of previous sales or records that establish a chain of ownership up to the creation of the NFT 306 and/or may include, licenses, patents, appraisals 354 as well as notarized documents, joint ownership contracts, liens or other information 356. In various embodiments, the provenance elements 327 can include evidence of the rights to create the NFT 306. As such various embodiments allow for services where the private key can be held by a third party or generated by a third party with permission while still allowing the NFT 306 to be verified with respect to its authenticity. This feature is expected to become increasingly desirable as services and industry around NFTs and blockchain tokens develop where a private key is stored on behalf of the creator/owner of the object or the NFT is created by the third party on behalf of the creator/owner.

In one or more embodiments, for both physical objects 307A and digital objects 307B, the contractual elements 328 include information that authenticate the object and NFT against any contractual rights, legal rights, or smart contracts that are associated with the NFT 306 and/or the object 307. In various embodiments, the contractual elements 328 include documentation of all intellectual property rights 360 associated with the object 307. For example, in various embodiments this information may include any patents, trademarks, or copyrights associated with the object along with any contracts or licenses relating to these intellectual property rights. Such documents and information, like other parts of the elements of identifying information/data used for building the NFT 306, thus may form part of the provenance elements 327 and/or of the contractual elements 328, depending on the elements of information/data required or desired for the structure of the NFT 306. In various embodiments, the contractual elements 328 can include NFT usage rights and smart contract terms 362. For example, various embodiments include any terms for how the NFT can be used. For example, terms for display of the object or NFT, derivative works, royalties or the like. In addition, in various embodiments the smart contract code of the NFT can be hashed and included. Furthermore, the contractual elements 328 can include contractual documents like Memorandums of Understanding (MoU) or any other type of contract or agreement 364. In various embodiments, the above-mentioned additional elements 329 can include any additional properties 368 or supplemental documentation 369 of the physical object 307A or of the digital object 307B.

Furthermore, in one or more embodiments, all elements that are supposed to be hashed have corresponding hashing instructions which are also stored next to said elements on the off-chain storage 321 and which allow for the exact reproduction of the corresponding hash values.

The off-chain storage 321 moreover comprises at least an identification manifest 322 that includes a complete list 323 of all elements required and/or desired in the NFT as well as, a certificate 324 of a certifying authority 414. In various embodiments, the certificate 324 is generated as evidence that the identifying elements included in the NFT and off-chain storage are correct and accurate. As such, in various embodiments the certificate 324 can include various information which can verify that the contents of the corresponding off-chain storage such as a list of all identifying elements 323.

In one or more embodiments the off-chain storage 321 can include said NFT certificate 412 which can be a signed digital or physical certificate issued for the NFT by the certifying authority 414 with a trusted root key. As described above, in one or more embodiments the NFT certificate 412 is a digital certificate issued by a certifying authority that indicates that the NFT 306 itself has been authenticated by a certifying authority. As such, in one or more embodiments the NFT certificate 412 can be quickly used to verify the authenticity of the NFT without requiring one to validate the contents of off-chain storage themselves. In one or more embodiments the NFT certificate 412 can further include a unique certificate serial number that can be used to identify the NFT 306. In various embodiments, where the certification 412 is a digital certificate, the certificate can be stored within a cryptographic smart chip or other computer storage medium comprising computer program means allowing a user to view and validate cryptographic information on-board.

In various embodiments, part or all of the contents in the off-chain storage system may be stored on the off-chain storage 321 in protected manner, e.g. by encryption. For example, in certain embodiments, the contents stored on the off-chain storage system could be encrypted using the public key of a key pair held by the owner of the object 307 or of the NFT 306 or by a third party acting on behalf of said owner such that only the token holder or object owner or third party acting on their behalf may decrypt the encrypted information by use of the corresponding private key of said key pair. In general, in one or more embodiments, the owner of the object 307 or of the NFT 306 and/or a third party acting on behalf of said owner have access to the off-chain storage system in read/write mode, whereas all other parties just have no or read-only access.

Reverting to FIG. 3C, it schematically illustrates, for an object 307 which may consist in a physical object 307A or in a digital object 307B, the structure of a NFT 306 according to the present invention after hashing of the elements of identifying information/data stored on the off-chain storage 321 and used for minting the NFT. As far as required or desired, part or all of the elements relating to object 307 as well as collected and stored on the off-chain storage 321 such as described here above with reference to FIGS 3A-3B, i.e. the subject elements 325, the authenticity elements 326, the provenance elements 327, the contractual elements 328, and additional elements 329, are hashed such as to produce hashed subject elements 370, hashed authenticity elements 372, hashed provenance elements 374, hashed contractual elements 376, and hashed additional elements 378. In various embodiments, in addition to the hashed elements the above-mentioned identification manifest 322 including the complete list 323 of all the elements comprised in the NFT and, in some embodiments, the certificate 324 of the certifying authority 414 also form the structural components of the NFT, such as shown in FIG. 3C.

While FIG. 3C depicts the specific hashed elements that are described here above, this is not intended to be limiting. For example, in various embodiments hashes of any additional elements 378 can be included. Generally, the hashed information will be such that it functions to verify or authenticate the connection between the NFT 306 and the object 307 and/or the connection between the object 307 and its creator/owner and/or authenticate the NFT 306 as being rightfully minted. However, in various embodiments the hashed information could include any supplemental documentation 369 related to the object 307 and/or and its creator/owner and thus related to the NFT 306.

In one or more embodiments the NFT 306 will additionally include some unhashed information. In such embodiments the unhashed information can include links 380, 382, 384, 386, 388 to locations of off-chain storage of the unhashed information/elements that is used to generate hashed elements 370, 372, 374, 376, 378. In such embodiments, the off-chain storage 321 of the unhashed information/elements allows for an exact reproduction of the hashed values in the NFT 306, thereby enabling the NFT 306 to be authenticated vs the set of information which details the rights, unique characteristics, and pre-chain history of the object as described above. In various embodiments, all off-chain storage is configured for permanent or long-term storage. For example, in various embodiments the unhashed information could be stored utilizing the InterPlanetary File System (IPFS), a decentralized storage solution or any long-term data storage solution. For example, in various embodiments the unhashed elements could be stored in storage locations associated with public records and certificate authorities. In certain embodiments, the unhashed elements of information/data could be stored using a blockchain network.

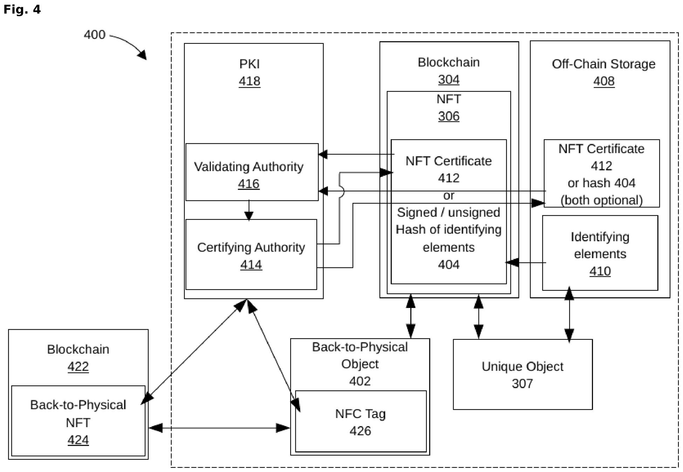

Referring to FIG. 4, a system 400 for producing and certifying physical authenticity documents corresponding to the NFT 306 and/or the off-chain identifying elements is schematically depicted.

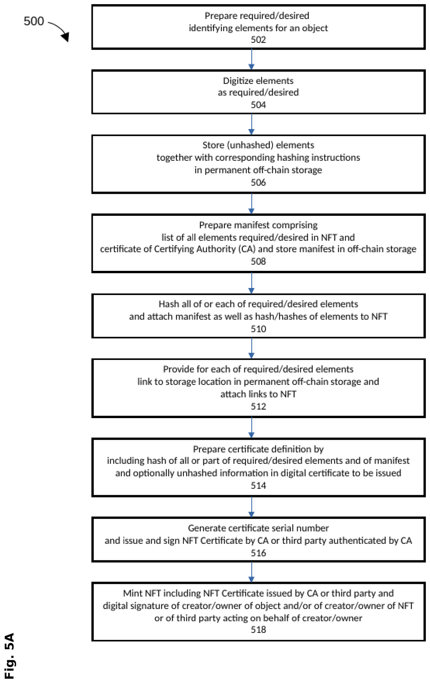

In various embodiments, the system 400 includes a blockchain 304 including an NFT 306 that in accordance with various embodiments and as described above comprises a hash 404 of elements of identifying information/data, said hash 404 optionally being signed or provided with an NFT certificate 412 as will be described in detail here below with reference to FIG. 5A. In one or more embodiments the system 400 additionally includes off-chain storage 408. In such embodiments the off-chain storage may be substantially similar to the storage systems described above with reference to FIG. 3A-3B. As such, the off-chain storage 408 is a long-term storage solution that is configured to store an unhashed copy of all elements 410 used to generate the NFT 306 which allows to authenticate the object 307. In various embodiments, and as mentioned above, the NFT 306 and/or off-chain storage 408 can include an NFT certificate 412 which in various embodiments can be a signed digital or physical certificate issued from a certifying authority 414 with a trusted root key. In one or more embodiments, the system 400 may additionally include a public key infrastructure (PKI) 418 comprising a certifying authority 414 and a validating authority 416.

As described above, in various embodiments, the NFT certificate 412 is a certificate from a trusted authority 414 that is generated as evidence that the NFT 306 has been authenticated by a certifying authority and may for example consist in a X.509 or equivalent certificate. As such, in one or more embodiments the NFT certificate 412 can be quickly used to verify the authenticity of the NFT without requiring one to validate the contents of off-chain storage themselves. In one or more embodiments the NFT certificate 412 can further include a unique certificate serial number that can be used to identify the NFT 306. In various embodiments, where the certification 412 is a digital certificate, the certificate can be stored within a cryptographic smart chip or other computer storage medium comprising computer program means allowing a user to view and validate cryptographic information on-board.

In various embodiments, once the NFT certificate 412 has been generated, the validity of the digital certificate and therefore authenticity of the corresponding NFT 306 may be checked by the owner of the NFT, or further audited by a third-party validating authority 416 whenever and wherever required, by use of network computing means, including computers connected to a network. To this effect, the network computing means cooperates with the storage means and the validating authority 416 and/or the certifying authority 414 so as to sensibly output, in real time, the status of validity of the NFT certificate 412.

For example, in various embodiments the validating authority 416 or owner of the NFT checks the validity period of the certificate as well as whether it has been revoked, the latter against the certifying authority 414 using, e.g., a certificate revocation list (CRL) generally hosted at the certifying authority or an online certificate status protocol (OCSP). Both of these are a kind of list comprising information on issued certificates, in particular a corresponding entry in case individual certificates were compromised. Thus, this comprises interaction of the network computing means with both the storage means and the validating and/or the certifying authority such as to allow access by the validating and/or certifying authority to the NFT certificate. This demonstrates that embodiments provide for a convenient technical solution to the problem of providing a non-forgeable NFT certificate of authenticity which may easily, whenever as well as almost wherever, be audited for its validity.

Further, if so desired, the system 400 allows to establish long-term and persistent links between the NFT 306 and a "Back-to-Physical" object 402, respectively long-term and persistent links between the object 307 which is linked to the NFT 306 and a "Back-to-Physical" object 402. In one or more embodiments, the Back-to-Physical object 402 is a device or object including some computer readable storage medium where various data related to the NFT 306 can be stored such that the storage medium becomes a physical manifestation of the NFT 306. For example, in various embodiments a copy of the NFT 306, a copy of one or more transactions of the NFT 306, links to the NFT in a block explorer, a hash of the NFT 306, the NFT certificate 412 or other information could be stored within the storage medium. Furthermore, in one or more embodiments, once this is established, an additional NFT optionally can be minted for the storage medium in order to authenticate the link between the original NFT 306 and the storage medium. Minting the additional NFT may be performed in the same manner as minting the original NFT 306, such as will be described in detail here below with reference to FIG. 5A. In such embodiments, the new NFT can then be traded on a blockchain 422. In one or more embodiments this additional NFT is referred to as a "Back-to-Physical" NFT 424, whereby the Back-to-Physical NFT is a digital representation of that processes described herein has been successfully performed. In various embodiments, a physical embodiment of the "Back-to-Physical" NFT 424 can be established using NFC tags 426 as a storage medium. In various embodiments, the structure and composition of the original NFT 306 along with identifying information for the NFT 306 is stored in the NFC tag 426. In various embodiments, the NFC tag 426 could be connected to or attached or included with the object 402 corresponding to the NFT 306.

However, in certain embodiments the NFC tag 426 could be connected to or attached or included with another object. For example, in some embodiments the NFC tag 426 could be included with or attached to a Back-to-Physical object 402 which is a copy of the object 307 which is linked to the original NFT 306. In general, the Back-to-Physical object 402 may in this case be a manufactured or printed physical manifestation of the original object 307 and may for example consist in a print of a digital image or animation of the original object 307, in a holographic projection of the object 307, in a miniature model of the object 307, in a physical certificate representing ownership of the object 307 or of the original NFT 306, or any other such physical representation of the original object 307.

In some embodiments the NFC tags 426 can be programmed using a PKI (public key infrastructure) certificate, or other digital signature technology known in the art. In various embodiments, the Back-to-Physical NFT 424 and/or physical embodiment can further receive certification using a certifying authority 414 as described herein. In such embodiments, the inclusion of identifying information of the NFT 306 within the physical embodiment of the Back-to-Physical object 402 renders a public-private key pair programmed into an NFC tag 426 with information included such that the physical embodiment is authenticatable on the blockchain. In such embodiments the NFC tag 426 could function as a physical certificate to represent ownership of the Back-to-Physical NFT 424 and thus of the Back-to-Physical object 402. In various embodiments the NFC tag could contain a private key of a public-private key pair corresponding to the Back-to-Physical NFT 424. In such embodiments, possession of the NFC tag 426, respectively of the Back-to-Physical object 402 to which the NFC tag 426 is attached to, would thus demonstrate possession of the associated Back-to-Physical NFT 424.

Referring to FIG. 5A, a method 500 of minting a long-term persistently authenticatable NFT is depicted according to one or more embodiments of the disclosure. In one or more embodiments the method 500 includes, at operation 502, preparing elements of identifying information/data required and/or desired for creating a NFT 306 according to the present invention for an object 307 which may consist in a physical object 307A or a digital object 307B. As described above, these elements can include subject elements 325, authenticity elements 326, contractual elements 327, provenance elements 328, and additional elements 329 which independently serve to prove the object's authenticity and origin and to prove/show ownership or rights to mint an NFT. In one or more embodiments the method 500 includes, at operations 504 and 506, digitizing the identifying elements and storing the unhashed elements in permanent off-chain storage 321. In various embodiments, hashing instructions for each of these elements 325, 326, 327, 328, 329 are provided and stored together with the corresponding element in the off-chain storage 321.

In one or more embodiments, the method 500 further includes, at operation 508, preparing an identification manifest 322 that comprises a complete list 323 of all elements required and/or desired in the NFT 306, such as previously stored in the off-chain storage 321, the identification manifest 322 then being stored in the off-chain storage 321. In some embodiments, the method 500 includes, at operation 508, adding to or listing in the identification manifest 322 the certificate 324 of the trusted certifying authority 414 and storing the certificate 324 in the identification manifest 322 in the off-chain storage 321 as well. The method 500 further includes, at operation 510, hashing all of or each of the required/desired and digitized identifying elements 325, 326, 327, 328, 329 as well as attaching the identification manifest 322 as well as said hash or hashes 370, 372, 374, 376, 378 of these elements to the NFT 306. In some preferred embodiments, the method 500 includes, at operation 512, providing for each of the required and/or desired identifying elements 325, 326, 327, 328, 329, respectively for the corresponding hashes 370, 372, 374, 376, 378 of these elements created in previous operation 510, links 380, 382, 384, 386, 388 to locations in the off-chain storage 321 of the unhashed information/elements that is used to generate hashed elements 370, 372, 374, 376, 378 as well as attaching to the NFT 306 these links 380, 382, 384, 386, 388 to locations in the off-chain storage 321.

In various embodiments, the method 500 includes, at operation 514, preparing a NFT certificate 412 to be issued by said certifying authority 414 for the NFT 306. In various embodiments, the NFT certificate 412 can be a certificate corresponding to the contents of the off-chain storage and/or identification manifest and/or the hash of part or all of the elements of identifying information on the off-chain storage 321. A certificate definition prepared for issuing the NFT certificate 412 may include a hash of the entire group of required/desired identifying elements and of said identification manifest 322 as well as, optionally, the unhashed elements. Alternatively, in other embodiments, the certificate definition prepared for issuing the NFT certificate 412 may include the hashes of the individual elements of the NFT. Put another way, at operation 514, in various embodiments a digital certificate to be issued may comprise any or all of the identifying information that is used to construct the NFT 306.

At operation 516, the method 500 includes issuing and signing the NFT certificate 412 by said certifying authority 414, which can include generating a unique certificate serial number allowing its use for identifying the NFT 306. In this case, the private key of the asymmetric cryptographic key pair of the certifying authority 414 is used to create a digital signature provided by the certifying authority 414 for the NFT certificate 412, such that the public key of this key pair may be used to verify authenticity of the NFT 306. As such, in various embodiments the NFT certificate 412 can be used to independently verify any of the identifying information by relying on the certifying authority 414. In certain embodiments, the signed certificate may be provided, like described above, directly by use of the public-private key pair of the certifying authority 414 or, alternatively, indirectly by use of a key pair generated by a third party whose authenticity and integrity may be verified by the certifying authority. In certain simplified embodiments not illustrated in FIG. 5A, the hash of part or all of the elements of identifying information on the off-chain storage 321, instead of being certified by a certificate signed directly by a certifying authority (CA) which next to a validating authority (VA) forms part of a public key infrastructure (PKI) or signed indirectly by a third party authenticated by said certifying authority, may be just signed by use of the asymmetric cryptographic public-private key pair of the certifying authority or by use of a key pair generated by a third party whose authenticity and integrity may be verified by the certifying authority. For example, the hash may be signed with the help of a key-dependent hash function, by use of the private key of the corresponding key pair. The signature of the hash provided in this manner may then be verified by use of the public key of the corresponding key pair. In certain simplified embodiments not illustrated in FIG. 5A, either, the hash of part or all of the elements of identifying information on the off-chain storage 321 may be neither certified by a certificate signed directly by a certifying authority or signed indirectly by a third party authenticated by said certifying authority nor signed by use of the asymmetric cryptographic public-private key pair of the certifying authority or of a key pair generated by a third party, but the hash may simply, as such, form part of the NFT 306. In the latter case, the NFT 306 on the blockchain 304 and the elements of identifying information on the off-chain storage 321 are connected by an unsigned/uncertified hash 404, which nevertheless allows to verify authenticity of the NFT 306 by checking the hash value by use of the elements of identifying information on the off-chain storage 321 which are accessible via the links 380, 382, 384, 386, 388 attached to the NFT 306. In this case, instead of generating a unique certificate serial number, operation 516 of the method 500 can include generating a unique NFT serial number allowing its use for identifying the NFT 306. In the former two cases, the NFT 306 on the blockchain 304 and the elements of identifying information on the off-chain storage 321 are connected by a signed, respectively by a certified hash 404, such that authenticity of the NFT 306 may be checked directly by verifying the corresponding signature of hash 404, respectively by verifying the NFT certificate 412, it being nevertheless possible also in these cases to verify authenticity of the NFT 306 by checking the hash value by use of the elements of identifying information on the off-chain storage 321.

The method 500 includes, at operation 518, minting an NFT that includes, in various embodiments, one or more of hashes 370, 372, 374, 376, 378 of the elements 325, 326, 327, 328, 329 or a hash of the entire group of these elements, links 380, 382, 384, 386, 388 to locations in the off-chain storage 321 of these elements, the identification manifest 322 comprising a complete list 323 of these elements and the certificate 324 of the trusted certifying authority 414, as well as the NFT certificate 412 which comprises a hash of the required/desired identifying elements and, if so desired, of said identification manifest 322 and which is signed as described above by the certifying authority 414 or by a third party authenticated by said certifying authority 414. In the simplified embodiments mentioned above and not illustrated in FIG. 5A, the method 500 includes, at operation 518, minting an NFT that includes an unsigned or signed hash of the desired/required elements of identifying information 325, 326, 327, 328, 329 and, optionally, links 380, 382, 384, 386, 388 to locations in the off-chain storage 321 of these elements, as well as, optionally, the identification manifest 322 comprising a complete list 323 of these elements and/or the certificate 324 of the trusted certifying authority 414, as far as the hash is signed by the certifying authority. In the most simple embodiments not illustrated in FIG. 5A, the minted NFT 306 includes an unsigned or signed or certified hash of the desired/required elements of identifying information 325, 326, 327, 328, 329, which in all these cases is preferably completed by links 380, 382, 384, 386, 388 to locations in the off-chain storage 321 of these elements.

In various embodiments, minting an NFT at operation 518 of the method 500 includes providing a digital signature by the creator/owner of the object 307 and/or the creator/owner of the NFT 306 or by a third party acting on behalf of said creator/owner. Said digital signature is provided by use of an asymmetric cryptographic key pair comprising a public key and a private key held by said creator/owner or by said third party, the private key of this creator's/owner's or third party's key pair being used to create the digital signature which is included on the blockchain 304, whilst the public key may be used to verify the digital signature, such that the actual identity of the NFT minter, in principle, may be verified. However, in conventional blockchain schemes it is usual or at least possible that the NFT minter is pseudo-anonymous due to the fact that his private key corresponds to a web-of-trust-like key pair, thus leading to pseudo-anonymity of the NFT minter, respectively of the creator/owner of the object 307 and/or of the creator/owner of the NFT 306. In various embodiments of the method 500 according to the present invention, wherein the system 400 comprises a PKI and therefore comprises a certifying authority (CA) as well as a validating authority (VA), minting an NFT at operation 518 comprises a "hierarchical-type" key pair connected to said certifying authority and being generated by said creator/owner of the object 307 or the creator/owner of the NFT 306 or by a third party acting on their behalf, such that their authenticity and integrity and/or their identity may be verified by the certifying authority and the corresponding validating authority. Therefore, although the above mentioned key pair used for the digital signature provided by the certifying authority 414, or by a third party authenticated by the certifying authority 414, for the NFT certificate 412 in principle may be used to verify authenticity and integrity of the NFT 306 against the certifying authority 414 and/or the validating authority 416, various embodiments of a method 500 according to the present invention additionally provide, directly within the minted NFT 306, further means to verify authenticity and integrity of the NFT 306 as well as of the corresponding object 307 and/or of its creator/owner, namely the public key of the above mentioned creator's/owner's or third party's key pair being used to create the digital signature of the NFT 306 and/or the public key of the above mentioned certificate 324 of the trusted certifying authority 414 in the identification manifest 322 of the NFT 306. In particular, in one or more embodiments, the certifying authority 414 may not only act by issuing and signing said NFT certificate 412 or by signing said hash 404 in order to certify authenticity and integrity of the elements 325, 326, 327, 328, 329 required or desired in the NFT 306, but may also act in order to allow for verification of the authenticity and integrity and/or of the identity of the creator/owner of the object 307 and/or of the creator/owner of the NFT 306 and/or of any third party acting on their behalf.

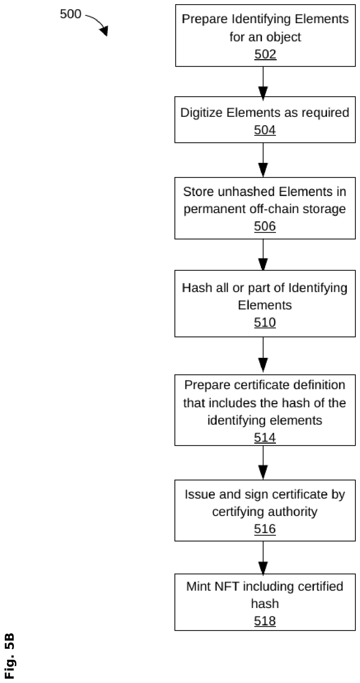

Like mentioned above, in one or more embodiments of a method 500 of minting a long-term persistently authenticatable NFT according to the disclosure, several of the above mentioned operations are optional and FIG. 5B illustrates an example of such a method.

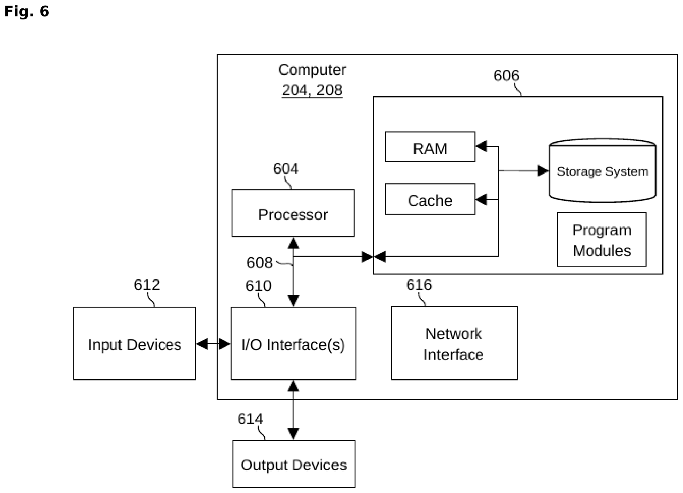

Referring to FIG. 6, a block diagram of an example embodiment of an internal structure of a computer/computing node 204, 208 in the digital processing environment of FIG. 2 is depicted. In various embodiments, the computer 204, 208 may be used to facilitate displaying audio, image, video or data signal information. As such, in various embodiments the computer 204, 208 may include a processor 604, memory 606 and a system bus 608, that connects different elements of the computer 204, 208 and enables the transfer of data between the elements. In various embodiments, memory 606 includes various computer implemented storage mediums such as RAM, cache memory, and other system storage. In various embodiments, computer executable code can be included or stored within memory 606 for execution by the processor 604. In various embodiments, the computer 204, 208 additionally includes an I/O device interface 610 for connecting various input 612 and output devices 614 (e.g., keyboard, mouse, touch screen interface, displays, printers, speakers, audio inputs and outputs, video inputs and outputs, microphone jacks, etc.) to the computer. In various embodiments, a network interface 616 allows the computer to connect to various other devices attached to a network, such as the network 212 of FIG. 2, disclosed above.

Software components of the computer-implemented system may be configured using any known programming language, including any high-level, object-oriented programming language. The computer-implemented system may include instances of processes that enable execution of transactions and recordation of transactions.

Further example embodiments disclosed herein may be configured using a computer program product; for example, controls may be programmed in software for implementing example embodiments. Further example embodiments may include computer program means stored in a computer-readable medium adapted to implement a method according to the present invention and, in particular, a non-transitory computer-readable medium containing instructions that may be executed by a processor which, when loaded and executed, cause the processor to complete methods described herein. It should be understood that elements of the block and flow diagrams may be implemented in software or hardware, such as via one or more arrangements of circuitry of FIG. 5, disclosed above, or equivalents thereof, firmware, a combination thereof, or other similar implementation determined in the future. In addition, the elements of the block and flow diagrams described herein may be combined or divided in any manner in software, hardware, or firmware. If implemented in software, the software may be written in any language that can support the example embodiments disclosed herein. The software may be stored in any form of computer-readable medium, such as random-access memory (RAM), read only memory (ROM), compact disk read-only memory (CD-ROM), and so forth. In operation, a general purpose or application-specific processor or processing core loads and executes software in a manner well understood in the art. It should be understood further that the block and flow diagrams may include more or fewer elements, be arranged or oriented differently, or be represented differently. It should be understood that implementation may dictate the block, flow, and/or network diagrams and the number of block and flow diagrams illustrating the execution of embodiments disclosed herein.

One or more embodiments may be a computer program product. The computer program product may include a computer-readable storage medium (or media) including computer-readable program instructions for causing a processor to perform one or more processes or functions as described herein. The computer-readable storage medium is a tangible device that can retain and store instructions for use by an instruction execution device. The computer-readable storage medium may be, for example, an electronic storage device, a magnetic storage device, an optical storage device, or other suitable storage media.

A computer-readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Program instructions, as described herein, can be downloaded to respective computing/processing devices from a computer-readable storage medium or to an external computer or external storage device via a network, for example, the Internet, a local area network, a wide area network and/or a wireless network. A network adapter card or network interface in each computing/processing device may receive computer-readable program instructions from the network and forward the computer-readable program instructions for storage in a computer-readable storage medium within the respective computing/processing device.

Computer-readable program instructions for carrying out one or more embodiments, as described herein, may be assembler instructions, instruction-set-architecture (ISA) instructions, machine instructions, machine-dependent instructions, microcode, firmware instructions, state-setting data, or either source code or object code written in any combination of one or more programming languages, including an object-oriented programming language such as Smalltalk, C++ or the like, and conventional procedural programming languages, such as the "C" programming language or similar programming languages.

The computer-readable program instructions may execute entirely on a single computer, or partly on the single computer and partly on a remote computer. In some embodiments, the computer-readable program instructions may execute entirely on the remote computer. In the latter scenario, the remote computer may be connected to the single computer through any type of network, including a local area network (LAN) or a wide area network (WAN), or public network.

One or more embodiments are described herein with reference to flowchart illustrations and/or block diagrams of methods, systems, and computer program products for enhancing target intercept according to one or more of the embodiments described herein. It will be understood that each block of the flowchart illustrations and/or block diagrams, and combinations of blocks in the flowchart illustrations and/or block diagrams, may be implemented by computer-readable program instructions.

These computer-readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer-readable program instructions may also be loaded onto a computer, other programmable data processing apparatus, or other device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some embodiments, the functions noted in the block may occur out of the order noted in the figures. For example, two blocks shown in succession may, in fact, be executed substantially concurrently, or the blocks may sometimes be executed in the reverse order, depending upon the functionality involved.

It should be understood that the term "blockchain" as used herein includes all forms of electronic, computer-based, distributed ledgers. These include consensus-based blockchain and transaction-chain technologies, permissioned and un-permissioned ledgers, shared ledgers and variations thereof. While Bitcoin and Ethereum may be referred to herein for the purpose of convenience and illustration, it should be noted that the disclosure is not limited to use with the Bitcoin or Ethereum blockchains and alternative blockchain implementations and protocols fall within the scope of the present disclosure.

It should also be understood that, while the systems and processes described above have been applied to non-fungible tokens, various embodiments of these systems and methods also have applicability in the context of a variety of other blockchain applications. For example, various embodiments have applicability for persistent authentication of tokens such as Security Token Offerings (STO) and Global Token Exchanges (GTE), as well as for any other applications involving similar or substantially equivalent types of tokens and blockchains.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to explain the principles of the embodiments, the practical application or technical improvement over technologies found in the marketplace, or to enable others of ordinary skill in the art to understand the embodiments disclosed herein.

In light of the above description, it is clear to a person skilled in the art that systems and methods according to the present invention provide numerous advantages and allow for long-term authentication of non-fungible tokens, in particular by means of a NFT certificate signed by a certifying authority, by a hash signed by a certifying authority, or by a simple hash, included in the non-fungible token as well as by means of identifying elements being used to create the non-fungible token and stored in persistent manner in an off-chain storage system.

## Claims

1. Blockchain system (400) for long-term authentication of non-fungible tokens, the system comprising:
a blockchain network including a distributed blockchain recording a non-fungible token (306) located at a public address (312) on the blockchain (304), and
an off-chain storage system (321) for persistent storage of identifying information associated with an object (307), the off-chain storage system (321) including one or more elements of identifying information (325, 326, 327, 328, 329) for the object (307), the one or more elements of identifying information (325, 326, 327, 328, 329) including at least one element that authenticates the object (307),
**characterized by the fact that** the system further comprises a public key infrastructure (418) comprising a certifying authority (414) and a corresponding validating authority (416),
**and by the fact that** the non-fungible token (306) and/or the off-chain storage system (321) includes a digitally signed hash (404, 370, 372, 374, 376, 378) of at least one of the one or more elements of identifying information (325, 326, 327, 328, 329) and/or includes an NFT certificate (412) including the hash (404, 370, 372, 374, 376, 378) of at least one of the one or more elements of identifying information (325, 326, 327, 328, 329) and a digital signature, the digital signature being generated using an asymmetric cryptographic key pair of said certifying authority (414) or of a third party authenticated by the certifying authority, such that the non-fungible token (306) and/or the off-chain storage system (321) is independently authenticatable against the certifying authority (414) and/or the validating authority (416).

2. System according to the preceding claim, **characterized by the fact that** the non-fungible token (306) and/or the off-chain storage system (321) includes an identification manifest (322) including a list (323) of all elements of identifying information used for creating the non-fungible token (306) and/or a certificate of the certifying authority (324).

3. System according to one of the preceding claims, **characterized by the fact that** the one or more elements of identifying information (325, 326, 327, 328, 329) include
- at least one subject element (325) representing the object, and/or
- at least one authenticity element (326) authenticating the object, and/or
- at least one provenance element (327) that establishes evidence of ownership (350) and/or creation of the object and/or a pre-blockchain history (352) of the object, and/or
- at least one contractual element (328) authenticating contractual rights associated with the object, said at least one contractual element preferably including smart contract code (362) for the non-fungible token in human-readable form, and/or
- at least one additional element (329) associated with said object (307).

4. System according to one of the preceding claims, **characterized by the fact that** the object is
- a physical object (307A) and the one or more elements of identifying information (325, 326, 327, 328, 329) include at least one of a description of unique identifying features (340) of the object, an image or audio (344) of the object and a frequency analysis (346) of said image and/or audio of the object or
- a digital object (307B) and the one or more elements of identifying information (325, 326, 327, 328, 329) include at least one of source material (341) and an image and/or audio (344) of the object.

5. System according to one of the preceding claims, **characterized by the fact that** the off-chain storage system (321) comprises hashing instructions for at least one or each of the one or more elements of identifying information (325, 326, 327, 328, 329) stored in the off-chain storage system (321).

6. System according to one of the preceding claims, **characterized by the fact that** all or part of the one or more elements of identifying information (325, 326, 327, 328, 329) are stored on the off-chain storage (321) in protected manner, preferably by encryption using the public key of a key pair held by an owner of the object (307) or of the non-fungible token (306) or by a third party acting on behalf of said owner, such that the encrypted information is accessible by decryption, by use of a corresponding private key of said key pair, only to the object owner or the token holder or third party acting on their behalf.

7. System according to one of the preceding claims, **characterized by the fact that** the non-fungible token (306) further comprises unhashed information including a location (380, 382, 384, 386, 388) of at least one or each of said elements of identifying information (325, 326, 327, 328, 329) on the off-chain storage system (321).

8. System according to one of the preceding claims, **characterized by the fact that** the non-fungible token (306) is a ERC-721 token on the Ethereum blockchain and/or the off-chain storage system (321) is a dedicated storage blockchain.

9. System according to one of the preceding claims, **characterized by the fact that** the system further comprises a computer readable storage medium connected to or attached or included with a Back-to-Physical object (402) which is a physical manifestation of the non-fungible token (306), wherein the computer readable storage medium contains a private key of a public-private key pair corresponding to the non-fungible token (306).

10. Method for generating persistently authenticatable non-fungible cryptographic tokens for a blockchain, the method comprising the steps of
(1) providing one or more elements of identifying information (325, 326, 327, 328, 329) associated with an object (307) for creating a non-fungible token (NFT) for the object, the one or more elements of identifying information including at least one element authenticating the object;
(2) storing the one or more elements of identifying information (325, 326, 327, 328, 329) in a persistent off-chain storage system (321), together with corresponding hashing instructions for each of the elements of identifying information (325, 326, 327, 328, 329);
(3) hashing all and/or each of the elements of identifying information (325, 326, 327, 328, 329) and attaching the hash (404) and/or the hashes (370, 372, 374, 376, 378) of each of the elements of identifying information (325, 326, 327, 328, 329) to the non-fungible token (306); **characterized by the fact that** the method further comprises the steps of
(4) preparing a certificate definition by including the hash (404) and/or hashes (370, 372, 374, 376, 378) in a digital NFT certificate (412) to be issued;
(5) issuing and signing the NFT Certificate (412) by use of a private key of an asymmetric cryptographic key pair of a certifying authority (414) or of a third party authenticated by the certifying authority; and
(6) minting the non-fungible token (306) on a blockchain (304), wherein the minted non-fungible token includes at least the hash (404, 370, 372, 374, 376, 378) of all and/or each of the one or more elements of identifying information (325, 326, 327, 328, 329) and the NFT certificate (412) issued and signed by the certifying authority (414) or by the third party authenticated by the certifying authority,
(7) wherein the non-fungible token (306) is independently authenticatable, by use of the NFT certificate (412) included in the non-fungible token (306), against the certifying authority (414) and/or a corresponding validating authority (416) and/or by use of the hashes (404, 370, 372, 374, 376, 378) of all and/or each of the elements of identifying information (325, 326, 327, 328, 329) included in the non-fungible token (306), against the one or more elements of identifying information (325, 326, 327, 328, 329) in the off-chain storage system (321).

11. Method according to the preceding claim 10, **characterized by the fact that** the method further comprises providing an identification manifest (322) comprising a list (323) of all of the elements of identifying information (325, 326, 327, 328, 329) used for creating the non-fungible token (306) and/or a certificate of the certifying authority (324).

12. Method according to one of the preceding claims 10 to 11, **characterized by the fact that** the one or more elements of identifying information (325, 326, 327, 328, 329) includes
- at least one subject element (325) representing the object, and/or
- at least one authenticity element (326) authenticating the object, and/or
- at least one provenance element (327) establishing evidence of ownership (350) of the object and/or creation of the object and/or a pre-blockchain history (352) of the object, and/or
- at least one contractual element (328) authenticating contractual rights associated with the object, said at least one contractual element preferably including smart contract code (362) for the non-fungible token in human-readable form, and/or
- at least one additional element (329) associated with said object.

13. Method according to one of the preceding claims 10 to 12, **characterized by the fact that** the object is
- a physical object (307A) and the one or more elements of identifying information (325, 326, 327, 328, 329) include at least one of a description of unique identifying features (340) of the object, an image or audio (344) of the object and a frequency analysis (346) of said image and/or audio of the object or
- a digital object (307B) and the one or more elements of identifying information (325, 326, 327, 328, 329) include at least one of source material (341) and an image and/or audio (344) of the object.

14. Method according to one of the preceding claims 10 to 13, **characterized by the fact that** storing the one or more elements of identifying information (325, 326, 327, 328, 329) in the off-chain storage system (321) comprises storing corresponding hashing instructions for at least one or each of the one or more elements of identifying information (325, 326, 327, 328, 329).

15. Method according to one of the preceding claims 10 to 14, **characterized by the fact that** the method further comprises providing links to a location (380, 382, 384, 386, 388) of at least one or each of said elements of identifying information (325, 326, 327, 328, 329) on the off-chain storage system (321) and attaching said links to the non-fungible token (306).

16. Method according to one of the preceding claims 10 to 15, **characterized by the fact that** minting the non-fungible token (306) on the blockchain (304) is performed by signing the non-fungible token using a private key of a key pair generated by an owner of the object (307) or of the non-fungible token (306) or by a third party acting on behalf of said owner, said key pair depending in hierarchical manner from said certifying authority (414), such that authenticity and integrity and/or identity of said owner of the object (307) or of the NFT (306) or of said third party acting on behalf of said owner is independently authenticatable against the certifying authority (414) and/or the validating authority (416).
